# EUROPEAN PATENT SPECIFICATION

(11) **EP 0 499 767 B1**
(45) Date of publication and mention of the grant of the patent: **10.04.1996**
(21) Application number: 91830357.9
(22) Date of filing: 27.08.1991
(51) Int. Cl.: G11B 23/113, G11B 15/66

(54) **Device for opening a protection element in a magnetic tape cassette**
Vorrichtung zum Öffnen eines Protektionselementes in einer Magnetbandkassette
Dispositif pour ouvrir un élément de protection dans une cassette à bande magnétique

(30) Priority: 22.02.1991 IT MI910464
(43) Date of publication of application: 26.08.1992
(73) Proprietor: TAPEMATIC S.p.A., I-20052 Monza (Milano) (IT)
(72) Inventor: Perego, Luciano, I-20050 Mezzago (MI) (IT)
(74) Representative: Righetti, Giuseppe

(56) References cited:
- EP-A- 0 281 884
- DE-A- 3 818 113
- DE-A- 3 822 306

## Description

The present invention relates to a device for opening a protection element in a magnetic tape cassette having a casing containing two hubs on which a magnetic tape is wound and a plate-like protection element slidably engaged to the casing and movable from a closed position in which it closes the apertures enabling access to the tape and formed in a lower portion of said casing to an opened position in which said apertures are uncovered, said device being of the type comprising guide means arranged to slidably support said cassette and positioning means adapted to stop the cassette to a predetermined position on the guide means.

It is known that tape cassettes such as audio and video cassettes substantially comprise a casing inside which two hubs are rotatably engaged, on which hubs a magnetic tape is wound and is exposed to the outside through suitable apertures formed in a lower portion of the casing. These apertures enable several members such as for example magnetic read, record and erasing heads, to approach the tape.

The hubs are in turn accessible, through engagement holes exhibited by the casing, to winding spindles driving the hubs in rotation so as to enable the tape to be wound.

In many cases when the cassette is not used, said apertures enabling to reach the tape are covered by protection elements the main function of which is to protect the tape against possible damages due for example to the presence of dust or to foreign mechanical or magnetic actions. In particular, in some types of cassettes of recent production the protection element consists of a plate-like bulkhead slidably engaged at the outside of the casing. When the cassette is not used, this protection element covers not only the apertures on the lower part of the cassette, but also the engagement holes of the hubs and further holes designed to receive dowels adapted to ensure the correct positioning of the cassette when used on playing and/or recording apparatus as well as on tape loading machines designed to carry out the loading of the magnetic tape into the cassettes.

When the cassette is used on one of said apparatus or loading machines, the protection element is elastically moved through rectilinear sliding on the casing from the previously specified closed position to an opened position in which the holes and apertures of the cassette are uncovered.

In greater detail, referring to loading machines, the cassette to be loaded slidably engaged between a pair of guides is provided to be first stopped at a predetermined position by suitable stop pins acting in abutment relation on said lower portion. Subsequently the displacement of the protection element to the open position is carried out so as to enable the dowels and winding spindles to engage into the corresponding holes.

The displacement of the plate-like element is carried out by an actuator designed to move a rod carrying an engagement lug according to a rectilinear path parallel to the sliding direction of the protection element; the engagement lug will act on a perimetrical edge of the protection element thereby causing the desired displacement thereof.

It is noted however that the interference between the engagement lug and the edge of the protection element takes place through contact surfaces of very reduced extension. As a result, when the protection element is moved, an accidental disengagement between these two elements due for example to a possible misalignement between the protection element and the engagement lug may easily occur, which will bring the protection element back to the closed position. Under this situation the protection element will close all apertures enabling access to the tape, holes for driving the hubs in rotation and holes for dowels just at the moment that the different operating members are about to come in engagement at the inside of said apertures and holes. This fact inevitably brings about the practical stoppage of the loading machine as well as risks of damages to the cassettes and operating members of the machine itself.

In accordance with the present invention, the problems of the known art are eliminated by a device capable of accomplishing the opening of the protection element by the displacement of a hook-shaped lug according to a circular path ensuring not only a side displacement of the protection element but also a vertical displacement aiming to avoid the accidental disengagement of the protection element itself from the hook-shaped element.

In particular the invention relates to a device for opening a protection element in a tape cassette characterized in that it comprises a rotatory actuator arranged to rotatably move a shaft according to an axis substantially at right angles to the displacement direction of the plate-like protection element, said shaft rigidly carrying an arm provided, at one end thereof, with an engagement lug which is movable, due to the angular rotation of said shaft upon command of the actuator, from a rest position in which it is spaced apart from the lower portion of the casing to an operating position in which it acts on the perimetrical edge of the protection element in order to keep it in the opened position.

Further features and advantages will become more apparent from the detailed description of a preferred embodiment of a device for opening a protection element in a magnetic tape cassette in accordance with the the present invention, given hereinafter by way of non-limiting example with reference to the accompanying drawings, in which:
- fig. 1 is a partly broken away perspective view of the device in question in an operating condition in which the cassette is supported by stop pins, the protection element being in its closed position;
- Fig. 2 is a partly broken away perspective view showing the device of fig. 1 in an operating condition in which an engagement lug keeps the protection element in the opened position.

Referring particularly to the drawings, 1 generally denotes a device for opening a protection element in accordance with the invention in a magnetic tape cassette.

In the embodiment shown the device 1 is designed to be used on tape loading machines arranged to carry out the loading of magnetic tape 2a into the cassettes 2.

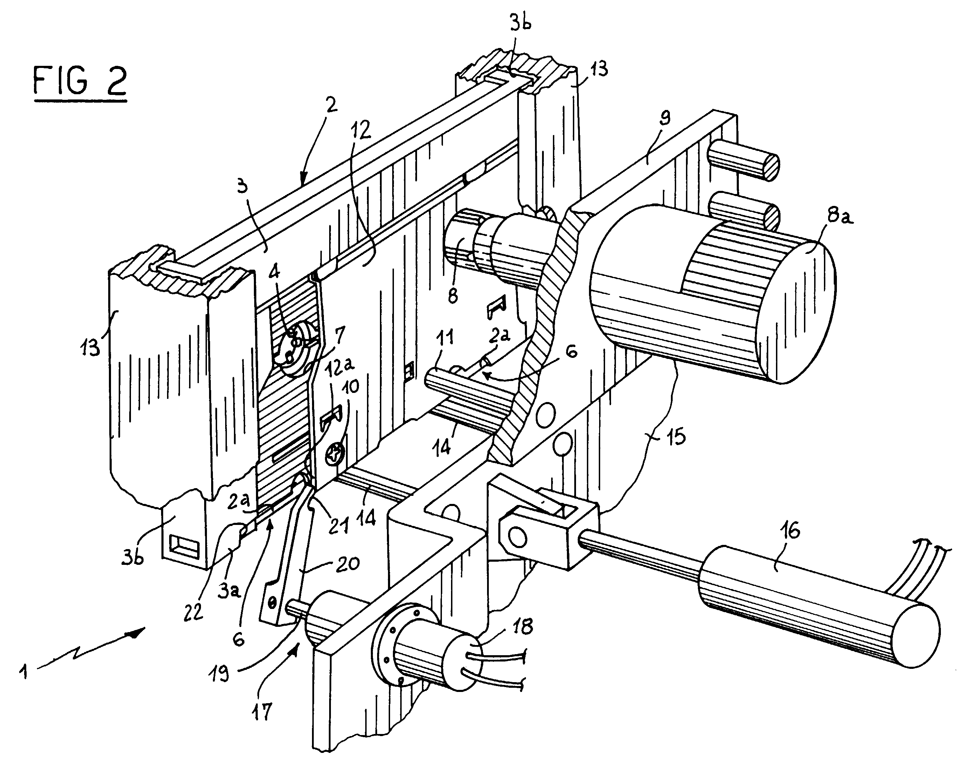

Each of said cassettes 2 is comprised of a casing 3 within which a pair of hubs 4 (only one of which is shown in Fig. 2) designed to wind the magnetic tape 2a is rotatably engaged. The tape 2a is exposed to the outside of the cassette 2 through a plurality of apertures 6 formed at a lower portion 3a of casing 3. Also provided in the casing 3 is a pair of engagement holes 7 to enable the hubs 4 to be engaged by at least a winding spindle 8 associated with said loading machine, mounted on a movement plate 9 to be moved close to and away from the cassette 2, and operable by a motor 8a to cause the winding of tape 2a by driving the hub itself in rotation.

Further shaped holes 10 formed adjacent the lower portion 3a of casing 3 are designed to engage respective dowels 11 carried by the movement plate 9 for purposes to be described in the following.

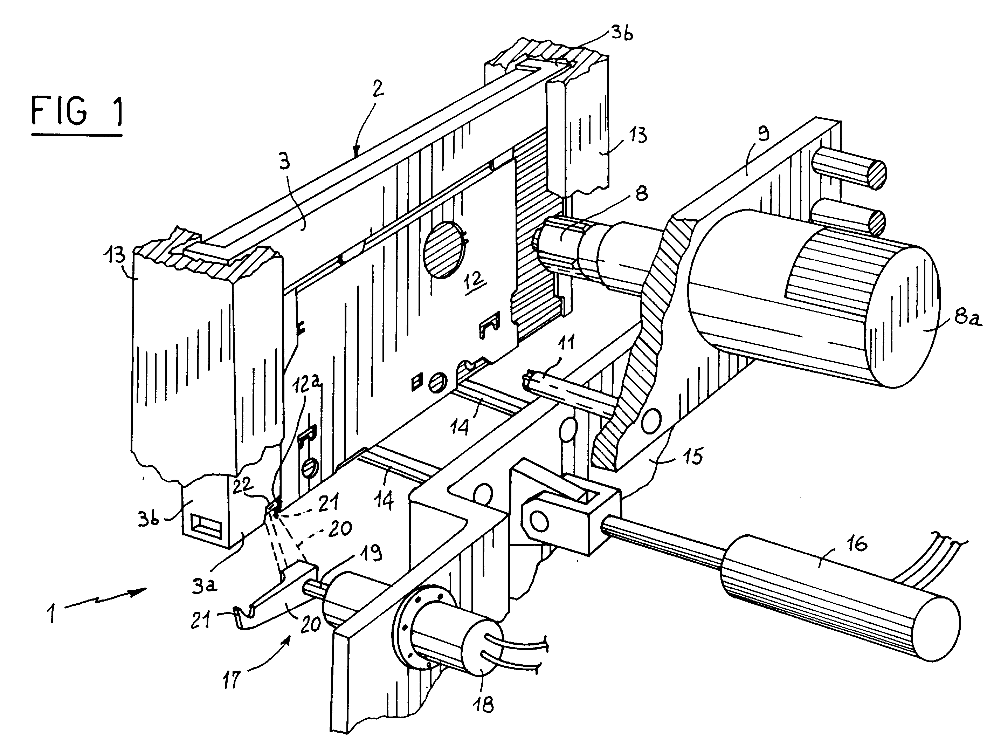

Slidably engaged on the casing 3 is a plate-like protection element 12 movable, against the action of spring means not shown as known per se and conventional, from a closed position in which, as shown in Fig. 1, it closes the access apertures 6, engagement holes 7 and shaped holes 10, to an opened position in which, as shown in Fig. 2, it uncovers said apertures and holes.

The device 1 is designed to control the displacement of the protection element 12 to the opened position to enable at least one of the hubs 4 to be engaged by the corresponding winding spindle 8, the introduction of dowels 11 into the shaped holes 10, as well as the access to apertures 6 by the other members associated with the loading machine and not described as not of importance to the ends of the invention.

For the purpose the device 1 is comprised of guide means consisting of a pair of substantially upright guides 13 designed to slidably support the cassette 2 by engaging it at the side portions 3b of casing 3.

Associated with the guides 13 is positioning means comprising at least two stop pins 14 mounted on a supporting plate 15 movable upon command of a fluid-operated actuator 16, in a direction substantially at right angles to the moving forward direction of the cassette 2 along the guides 13 so as to move the pins from a forward position in which they interfere with the cassette travel in order to hold the cassette in a predetermined position, to a backward position (not shown) in which they enable the cassette 2 to slide beyond said predetermined position.

Also associated with the device 1 is opening means 17 causing the displacement of the protection element 12 from the closed position to the opened position. In accordance with the present invention, the opening means 17 comprises a rotatory actuator 18 fastened to the supporting plate 15 and designed to operate a shaft 19 imparting angular rotations to it according to an axis substantially at right angles to the movement direction of the protection element 12.

An arm 20 is fastened to the shaft 19 and it extends radially from the shaft itself and exhibits an engagement lug 21 at the free end thereof. Since they are connected to the supporting plate 15, the arm 20 and engagement lug 21 are movable simultaneously with the stop pins 14 upon command of the fluid-operated actuator 16 from a forward position in which they are disposed on the travel taken by the cassette 2 along the guides 13 to a backward position (not shown) in which they do not interfere with the cassette sliding.

In the forward position, as a result of the operation of the rotatory actuator 18 the engagement lug 21 can be brought to a rest position in which, as shown in Fig. 1, it is spaced apart from the lower portion 3a of casing 3 to an operating position in which, as shown in Fig. 2, it acts in abutment against a perimetrical edge 12a of the protection element 12 so as to hold it in the opened position.

In greater detail, it is noted that during the shifting from the rest position to the opening position the engagement lug 21 reaches an intermediate position in which, as shown by dotted line in fig. 1, it enters a recess 22 formed in the casing 3 close to the perimetrical edge 12a of the protection element 12 in the closed position. Under this situation the engagement lug 21 comes into contact with the perimetrical edge 12a of the protection element 12 so as to urge it to the opened position when the the lug reaches its operating position.

Operation of the device in question described above mainly as regards structure, is as follows.

The cassette 2 is engaged between the guides 13 at a feed station (not shown as known per se and conventional) located on top of the guides themselves and provided in the loading machine with which the device 1 is associated.

The cassette 2 while moving down by gravity along the guides 13 is stopped at a predetermined position by the stop pins 14 previously brought to the forward position upon command of the fluid-operated actuator 16.

At this point the rotatory actuator 18 is operated so that the engagement lug 21 moving angularly from the rest position to the operating position causes the displacement of the protection element 12 to the respective opened position.

The circular movement imparted to the shaft 19 ultimately gives the engagement lug 21 a component of horizontal movement combined with a component of vertical movement. The component of horizontal movement causes the displacement of the protection element 12 to the opened position. The component of vertical movement advantageously results in the raising of the engagement lug 21 along the perimetrical edge 12a of the protection element 12 and consequently involves a gradual increase in the contact surfaces of the engagement lug and protection element as the movement goes on.

When the displacement of the protection element 12 to the opened position is completed the movement plate 9 is moved forward so as to cause the operating engagement of the winding spindle or spindles 8 into the hubs 4 as well as the introduction of the dowels 11 into the respective shaped holes 10. Under this situation the cassette 2 which is locked to a precise position by dowels 11 is ready to be loaded with magnetic tape 2a introduced through the access apertures 6 by known means not shown as conventional, provided in the loading machine and no of importance to the ends of the invention.

When the introduction of the magnetic tape 2a is completed, the movement plate 9 will be moved apart from the cassette 2 so as to disengage the dowels 11 therefrom. Immediately after this operation, the fluid-operated actuator 16 will return the stop pins 14 and engagement lug 21 to the backward position, the lug reaching first its rest position.

Therefore the spring return of the protection element 12 to the closed position is achieved while the cassette 2 goes on travelling along the guides 13 as far as it is discharged from the loading machine.

The present invention attains the intended purposes.

In fact the device in question, by virtue of the circular path taken by the engagement lug is more reliable in operation as compared with the devices of the known art.

In particular any risk that the protection element may be released by the engagement lug when said element is moving or when it is held in the opened position is eliminated.

In particular, while the device has ben described with reference to its use on cassette loading machines it is also possible to use it in recording and/or playing apparatus.

## Claims

1. A device for opening a protection element in a magnetic tape cassette (2) having a casing (3) containing two hubs (4) on which a magnetic tape (2a) is wound and a plate-like protection element (12) slidably engaged to the casing (3) and movable from a closed position in which it closes the apertures (6) enabling access to the tape and formed in a lower portion (3a) of said casing to an opened position in which said apertures are uncovered, said device (1) comprising:
- guide means arranged to slidably support said cassette (2); and
- positioning means arranged to stop the cassette (2) to a predetermined position on the guide means,
characterized in that it further comprises a rotatory actuator (18) arranged to rotatably move a shaft (19) according to an axis substantially at right angles to the displacement direction of the plate-like protection element (12), said shaft rigidly carrying an arm (20) provided, at one end thereof, with an engagement lug (21) which is movable, due to the angular rotation of said shaft upon command of the actuator (18), from a rest position in which it is spaced apart from the lower portion (3a) of the casing to an operating position in which it acts on the perimetrical edge (12a) of the protection element in order to keep it in the opened position.

2. A device according to claim 1, characterized in that said engagement lug (21) during its movement from the rest position to the operating position is designed to enter a recess (22) formed in the cassette casing (3) close to the perimetrical edge (12a) of the plate-like protection element (12) in the closed position, in order to engage the closure element (12) and urge it to the opened position when the lug (21) reaches its operating position.

3. A device according to claim 1, characterized in that said rotatory actuator (18), shaft (19), arm (20) and engagement lug (21) are connected to a supporting plate (15) movable upon command of a fluid-operated actuator (16) to bring the engagement lug (21) from a forward position in which it interferes with the path taken by the cassette (2) along the guide means to a backward position in which it does not interfere with the cassette sliding on the guide means.

4. A device according to claim 1, characterized in that said guide means comprises two substantially upright guides (13) engaging the cassette (2) at side portions (3b) of said casing (3).

5. A device according to claim 1, characterized in that said positioning means comprises at least two stop pins (14) mounted on a supporting plate (15) movable upon command of a fluid-operated actuator (16) to bring the pins (14) from a forward position in which they interfere with the path travelled by the cassette (2) along the guide means in order to hold it to a predetermined position, to a backward position in which they allow the cassette to slide beyond said predetermined position.

6. A device according to claim 5, characterized in that said rotatory actuator (18), shaft (19), arm (20) and engagement lug (21) are connected to said supporting plate (15) in order to cause the engagement lug (21) to be moved, as a result of the movement of the plate itself, from a forward position in which it interferes with the path travelled by the cassette (2) along the guide means to a backward position in which it does not interfere with the cassette sliding along said guide means.

## Patentansprüche

1. Vorrichtung zum Öffnen eines Protektionselementes in einer Magnetbandkassette (2) mit einem Gehäuse (3), das zwei Kerne (4), auf denen ein Magnetband (2a) aufgewickelt wird, und ein blattförmiges Protektions-element (12) beinhaltet, das am Gehäuse (3) gleitbar angreift und von einer Schließstellung, in der es in einem unteren Abschnitt (3a) des Gehäuses ausgenommene Bandzugangsöffnungen (6) schließt, in eine Offenstellung beweglich ist, in der die Öffnungen freigegeben sind, wobei die Vorrichtung (1) umfaßt:
- Führungsmittel, die dazu bereitgestellt sind, um die Kassette (2) gleitbar zu tragen; und
- Positioniermittel, die dazu bereitgestellt sind, die Kassette (2) in einer auf den Führungsmitteln vorbestimmten Stellung anzuhalten,
dadurch gekennzeichnet, daß sie überdies einen Drehantrieb (18) umfaßt, der dazu ausgelegt ist, eine Welle (19) gemäß einer im wesentlichen zur Verstellrichtung des blattförmigen Protektionselementes (12) senkrechten Achse zu verstellen, wobei die Welle unverdrehbar einen Arm (20) trägt, der an einem seiner Enden ein Eingriffsansatz (21) besitzt, der zufolge der Winkeldrehung der Welle durch Betätigung des Antriebes (18) von einer Ruhestellung, in der er von dem unteren Abschnitt (3a) des Gehäuses entfernt ist, in eine Arbeitsstellung beweglich ist, in der er gegen die umlaufende Kante (12a) des Protektionselementes wirkt, um sie in Offenstellung zu halten.

2. Vorrichtung nach Anspruch 1, dadurch gekennzeichnet, daß der Eingriffsansatz (21) während seiner Verstellung aus der Ruhestellung in die Arbeitsstellung dazu bestimmt ist, in eine im Gehäuse der Kassette (3) in der Nähe der umlaufenden Kante (12a) des blattförmigen Protektionselementes (12) ausgenommene in Schließstellung einladende Aufnahme (22) eingeführt zu werden, um das Schließelement (12) in Eingriff zu bringen und es in die Offenstellung zu drücken, sobald der Ansatz (21) seine Arbeitsstellung erreicht.

3. Vorrichtung nach Anspruch 1, dadurch gekennzeichnet, daß der Drehantrieb (18), die Welle (19), der Arm (20) und der Eingriffsansatz (21) mit einer Tragplatte (15) verbunden sind, die durch Betätigung eines fluidodynamischen Arbeitszylinders (16) beweglich ist, um den Eingriffsansatz (21) von einer vorgerückten Stellung, in der er mit der Wegstrecke der Kassette (2) längs der Führungsmittel interferiert, in eine zurückgezogene Stellung zu bringen, in der er nicht mit der Gleibewegung der Kassette auf den Führungsmitteln interferiert.

4. Vorrichtung nach Anspruch 1, dadurch gekennzeichnet, daß die Führungsmittel (2) im wesentlichen vertikale Führungen (13) umfassen, die mit der Kassette (2) im Bereich von Seitenabschnitten (3b) des Gehäuses (3) in Eingriff kommen.

5. Vorrichtung nach Anspruch 1, dadurch gekennzeichnet, daß die Positioniermittel mindestens zwei Arretierbolzen (14) umfassen, die auf einer Tragplatte (15) angebracht sind, die durch die Betätigung eines fluidodynamischen Arbeitszylinders (16) beweglich ist, um die Bolzen (14) von einer vorgerückten Position, in der sie mit der von der Kassette (2) verfolgten Wegstrecke längs der Führungsmittel interferieren, um sie in einer vorbestimmten Stellung zu halten, in eine zurückgezogene Stellung zu bringen, in der sie der Kassette erlauben, über diese vorbestimmte Stellung zu gleiten.

6. Vorrichtung nach Anspruch 5, dadurch gekennzeichnet, daß der Drehantrieb (18), die Welle (19), der Arm (20) und der Eingriffsansatz (21) mit der Tragplatte (15) derart verbunden sind, daß zufolge der Bewegung der Platte selbst der Eingriffsansatz (21) von einer vorgerückten Stellung, in der er mit der von der Kassette (2) verfolgten Wegstrecke längs der Führungsmittel interferiert, in eine zurückgezogene Stellung verstellt wird, in der er nicht mit der Gleitbewegung der Kassette auf den Führungsmitteln interferiert.

## Revendications

1. Dispositif pour ouvrir un élément de protection dans une cassette (2) à bande magnétique ayant un étui (3) contenant deux moyeux (4) sur lesquels est enroulée la bande magnétique (2a) et un élément de protection (12) en forme de lame engagé de manière coulissante à l'étui (3) et mobile d'une position fermée dans laquelle il bouche les ouvertures (6) donnant accès à la bande et ménagées à la partie inférieure (3a) dudit étui, à une position ouverte dans laquelle lesdites ouvertures sont mises à découvert, ledit dispositif (1) comportant:
- des moyens de guidage destinés à supporter de manière coulissante ladite cassette (2); et
- des moyens de mise en place destinés à arrêter la cassette (2) à une position prédéterminée sur les moyens de guidage,
caractérisé en ce qu'il comporte en outre un actionneur rotatif (18) susceptible d'actionner en rotation un arbre (19) suivant un axe sensiblement perpendiculaire à la direction de déplacement de l'élément de protection (12) en forme de lame, ledit arbre portant rigidement un bras (20) pourvu, à l'une de ses extrémités, d'une oreille d'engagement (21) qui est mobile, par une suite de la rotation angulaire dudit arbre sur commande de l'actionneur (18), d'une position de repos à laquelle il est éloigné de la partie inférieure (3a) de l'étui à une position de fonctionnement à laquelle il agit sur le bord périmétral (12a) de l'élément de protection en vue de le maintenir à la position ouverte.

2. Dispositif suivant la revendication 1, caractérisé en ce que ladite oreille d'engagement (21) pendant son mouvement de la position de repos à la position de fonctionnement est destinée à pénétrer dans un creux (22) ménagé dans l'étui de la cassette (3) à proximité du bord périmétral (12a) de l'élément de protection en forme de lame (12) à sa position fermée, dans le but d'engager l'élément de fermeture (12) et le pousser vers la position ouverte dès que l'oreille (21) a atteint sa position de fonctionnement.

3. Dispositif selon la revendication 1, caractérisé en ce que lesdits actionneur rotatif (18), arbre (19), bras (20) et oreille d'engagement (21) sont reliés à une plaque de support (15) mobile sur commande d'un actionneur hydraulique (16) en vue d'amener l'oreille d'engagement (21) d'une position en avant dans laquelle elle interfère avec le chemin suivi par la cassette (2) le long des moyens de guidage à un position en arrière dans laquelle elle n'interfère pas avec le glissement de la cassette sur les moyens de guidage.

4. Dispositif selon la revendication 1, caractérisé en ce que lesdits moyens de guidage comportent deux guidages sensiblement verticaux (13) engageant la cassette (2) en correspondance de portions latérales (3b) dudit étui (3).

5. Dispositif selon la revendication 1, caractérisé en ce que lesdits moyens de mise en place comportent au moins deux tétons de butée (14) montés sur une plaque de support (15) mobile sur commande d'un actionneur hydraulique (16) dans le but d'amener les tétons (14) d'une position en avant dans laquelle ils interfèrent avec le chemin suivi par la cassette (2) le long des moyens de guidage en vue de la retenir à une position prédéterminée, à une position en arrière dans laquelle ils permettent le glissement de la cassette au-delà de ladite position prédéterminée.

6. Dispositif selon la revendication 5, caractérisé en ce que lesdits actionneur rotatif (18), arbre (19), bras (20) et oreille d'engagement (21) sont reliés à ladite plaque de support (15) pour amener l'oreille d'engagement (21) à se déplacer, à la suite du mouvement de la plaque elle-même, d'une position en avant dans laquelle elle interfère avec le chemin suivi par la cassette (2) le long des moyens de guidage, à une position en arrière dans laquelle elle n'interfère pas avec le glissement de la cassette le long desdits moyens de guidage.
